# EUROPEAN PATENT SPECIFICATION

(11) **EP 0 329 658 B1**
(45) Date of publication and mention of the grant of the patent: **01.06.1994**
(21) Application number: 87906249.5
(22) Date of filing: 01.09.1987
(51) Int. Cl.: H02J 7/10

(54) **NON-ISOLATED THERMALLY RESPONSIVE BATTERY CHARGER**
NICHT-ISOLIERTES, TEMPERATURABHÄNGIGES BATTERIELADEGERÄT
CHARGEUR DE BATTERIE NON ISOLE THERMOSENSIBLE

(30) Priority: 29.09.1986 US 912086
(43) Date of publication of application: 30.08.1989
(73) Proprietor: Black & Decker Inc., Newark Delaware 19711 (US)
(72) Inventor: WALTER, Richard, T., Baldwin, MD 21013 (US); BHAGWAT, Pradeep, Baltimore, MD 21236 (US); LIPA, George, W., Baltimore, MD 21234 (US)
(74) Representative: Stagg, Diana Christine
(86) International application number: PCT/US87/02189
(87) International publication number: WO 88/02565

(56) References cited:
- EP-A- 83 492
- GB-A- 1 354 491
- US-A- 2 022 874
- US-A- 3 568 038
- US-A- 4 398 139

## Description

### TECHNICAL FIELD OF THE INVENTION

The present invention relates to battery chargers and, more particularly, to non-isolated battery chargers.

### BACKGROUND OF THE INVENTION

Various types of circuits have been developed for charging batteries, typically nickel-cadmium (Ni-Cd) batteries, used in battery-powered consumer products such as small appliances and portable, hand-held power tools. In general, the charging circuit must be relatively simple in design and inexpensive to fabricate since complexity and high cost are inconsistent with the need to provide low-cost products to the consumer market. Where the battery charger circuit is integrated with the product, for example, a hand-held, battery-powered electric drill having a built-in charger circuit, it is important that the circuit be physically compact and lightweight to allow maximum design flexibility in configuring the final product.

In designing a battery charger circuit, consideration must be given to the rate of charging and the risk of overcharging, since repeated overcharging shortens the useful life of the battery. In the past, low-current charging circuits, known as 'trickle' chargers, have been used to charge the battery by supplying a relatively low current over a long period of time, e.g., 8-16 hours. The current level is usually low enough so that overcharging will not occur, even if the charging current is continued for an indefinite period. While low-current battery chargers avoid the problem of overcharging, their long charging cycles are not acceptable from the consumer standpoint. While higher current battery chargers, viz., the 'fast' chargers, can bring a battery to a full charge in an hour or so, the risk of overcharging the battery is dramatically increased in comparison to low-current chargers. As can be appreciated, an optimal battery charger would effect charging in a relatively short time, as in the case of the fast charger, and would minimize the probability of overcharging the battery, as in the case of the trickle charger.

Since battery-powered products operate at relatively low voltages, charger circuits have included step-down transformers that step the power source voltage, typically 120 VAC, down to a level consistent with requirements of the battery, e.g., 12 volts, and, additionally, 'isolate' the low voltage portions of the charger circuit from the higher voltage power source. Unfortunately, transformers are relatively expensive, and, where the charge circuit is to be integrated into the product housing, represent a component that is physically larger and heavier than the other circuit components typically used in charging circuits. Thus, in a battery charging circuit designed for use in consumer products, especially where the charger circuit must be integrated into the product housing, it would be advantageous for both cost and design considerations if the transformer could be eliminated.

In one example of an earlier battery charger, Great Britain Patent 1 354 491 discloses a non-isolated temperature responsive battery charger circuit which includes a capacitive impedance, a diode bridge circuit and thermostat which respond to battery temperature. The capacitive impedance establishes a constant
charging current level which is rectified by the diode bridge. Upon reaching full charge, the battery heats to a temperature which causes the thermostats to respond and to terminate the charge cycle.

U.K. Patent GB 1 354 491 discloses a non-isolated temperature-responsive battery charger circuit which comprises: a diode bridge circuit for accepting an AC input current and for providing a rectified charging current; capacitive impedance means in circuit with said diode bridge circuit for direct connection to a source of AC input current for coupling the AC input current to said diode bridge circuit; and a battery charging circuit path connected to said diode bridge circuit for providing the charging current to a battery connected to said charging circuit path.

U.K. Patent GB 1 354 491 does not, however, disclose or suggest a switch means which further facilitates the application of electrical power from the battery to a load supplemented by a smaller proportion of electrical energy from the charging circuit of the capacitive impedance and the diode bridge.

In another example of an earlier battery charger, U.S. Patent 3 568 038 discloses a battery charger through an inverter including an oscillator having a saturable-core coil winding at the output thereof. The developed current is passed through a charger resistor to establish a low-level current for charging a battery. A switch means is provided for connecting the inverter directly to a motor thereby bypassing the charger resistor so as to provide a higher current for operation of the motor. The switch means connects the battery to the motor whereby the battery functions as a filtering capacitor of the higher current supplied by the inverter.

U.S. Patent 3 568 038 does not show a battery charger which utilises the charging circuit, i.e. the charging resistor in conjunction with the inverter, to provide a smaller proportion of energy to the load as a supplement to the energy supplied by the battery. Instead, U.S. Patent 3 568 038 teaches the removal of the charging resistor from the circuit so that a higher level of current is supplied from the inverter with the battery only providing for the filtering of the inverter output.

In still another example of an earlier battery charger, U.S. Patent 4 398 139 shows a battery charging circuit which includes parallel reverse-connected LED-type diodes which are connected in series with a current-establishing resistor in the charge circuit. One diode glows red when charging current flows therethrough and the other diode glows green when no charging current flows to thereby provide indication of charge and no-charge modes of operation.

U.S. Patent 4 398 139 does not show a capacitive impedance means which establishes the level of charging current with parallel back-to-back diodes connected in parallel with the impedance to provide a discharge path for the capacitive impedance.

In further example of an earlier battery charger, U.S. Patent 2 022 874 shows a trickle charging system for storage batteries which varies the level of trickle charging current during a trickle charging mode. As noted, storage batteries require varying levels of trickle charge current depending upon the conditions occurring within the battery and the atmospheric conditions as they relate to temperature. At lower temperatures, a large resistance is connected in the charging circuit to maintain a comparatively low charging current level. As temperature increases, one or more thermostats are operated to remove resistance from the circuit whereby the trickle charge current increases. Thus, U.S. Patent 2 022 874 teaches the removal of resistance from the charge circuit as temperature increases and actually increases charging current as temperature increases. There is no suggestion of responding to the temperature exceeding a threshold value to effectively reduce the charging current from a constant-current full charge level to a lower trickle charge level.

In still a further example of an earlier battery charger, European Patent Application 0 083 493 shows a fast charge circuit wherein a line voltage of 120 volts at a line frequency of 60 Hz is transformed, full-wave rectified and applied to a battery pack being charged. A pair of voltage comparators monitor (1) a sensing voltage at the output of the rectifier which is representative of the charging voltage and (2) a trough voltage represented by the valleys of the rectified pulsations. During a window when the sensing voltage is less than a predetermined threshold and when the trough voltage exceeds the threshold, the comparators indicate that the charging should be terminated. This completes the normal charging cycle of the charger illustrated in EP Application 0 083 492.

If, at any time during the fast charging cycle, the battery cells develop an excessive or unsafe temperature, a thermostatic switch will open to switch from the fast charge mode to the trickle charge mode by breaking the circuit. It is noted that EP Application 0 083 492 does not teach the use of a thermostatic switch to terminate a fast charge cycle at the completion of the cycle. Instead, the EP Application teaches the use of comparators to terminate the fast charge cycle upon completion thereof and uses the thermostatic switch only as a safety valve to terminate the fast charge cycle only in the event that the battery cells rise to a temperature which exceeds a safe value. Thus, it is likely in the context of the teaching of EP Application 0 083 492 that the thermostatic switch will rarely be used, if ever, and certainly will never be used to terminate the fast charge cycle at the normal completion thereof.

Also, EP Application 0 083 492 shows a timer which terminates operation of the charger after a prescribed time as an additional safety feature.

### DISCLOSURE OF THE INVENTION

It is an object of the present invention to provide an improved non-isolated battery charger wherein the battery charger determines when the battery undergoing charging has attained a full charge and then terminates the full charging rate, switching from the full charging rate to a trickle charge rate.

It is a further object of some embodiments of the invention to optionally enable the battery charger to supply power to a load, e.g. an electric motor, connected to the battery in addition to the power being supplied by the battery itself.

According to the present invention, a non-isolated temperature-responsive battery charger circuit which comprises: a diode bridge circuit for accepting an AC input current and for providing a rectified charging current; capacitive impedance means in circuit with said diode bridge circuit for direct connection to a source of AC input current for coupling the AC input current to said diode bridge circuit; and a battery charging circuit path connected to said diode bridge circuit for providing the charging current to a battery connected in said charging circuit path; is characterised by first and second serially connected temperature responsive thermostats electrically connected in said charging circuit path to pass charging current as determined by said capacitive impedance means to the battery being charged when said first and second thermostats are in a closed state; resistive impedance means in parallel circuit with said first and second serially connected thermostats, for conducting current when at least one of said first or second thermostats is open to effect trickle charging of the battery; said first thermostat being in thermal communication with the battery being charged to sense the temperature of the battery, and said second thermostat being in thermal communication with said resistive impedance means to sense the temperature of said resistive impedance means; said first thermostat responding to the temperature of the battery to interrupt the flow of full charging current to the battery through said first thermostat when the temperature of the battery exceeds a predetermined threshold representative of a substantial full charge and to cause trickle charging current flow through said resistive means; and said second thermostat (TS2) responding to the temperature of said resistive impedance means (Rt) to interrupt the circuit to said first thermostat (TS1') when the temperature of said resistive means (Rt) exceeds a predetermined threshold.

The capacitive impedance means may comprise at least first and second serially connected capacitors connected to the diode bridge circuit for direct connection therewith to the source of AC input current. The first and second capacitors may be electrolytic capacitors serially connected with one polarity terminal of one capacitor connected to the same polarity terminal of the other and with a diode connected across each capacitor.

Circuit means may be connected in parallel circuit with said capacitive impedance means for discharging said capacitive impedance means. This circuit means may comprise parallel connected back-to-back diodes in series circuit with a resistor. At least one of these parallel connected diodes may be a light emitting diode.

Switch means, in circuit with the battery and the first and second thermostats, may be included for providing electrical power for the battery and the diode bridge circuit to a connected load, e.g. an electric motor. This switch means may be double pole switch means for disconnecting the battery from the load when the switch means is open, and for shunting the temperature responsive means and connecting both the battery and said capacitive impedance means to the load when the switch means is closed.

The capacitive impedance means, the temperature responsive means, and the diode bridge circuit may be connected in series circuit. However, the temperature responsive means may be connected in a leg of the diode bridge circuit.

In order that the invention can be better understood a number of proposed battery chargers, including a preferred embodiment of the present invention, will now be described in greater detail with reference to the accompanying drawings in which:-
Figure 1 is a schematic diagram of an alternative proposal for a non-isolated thermally responsive battery charger;
Figure 1A is a partial schematic diagram representing an alternate capacitive impedance for the battery charger circuit of Figure 1;
Figure 1B is a variation of the non-isolated thermally responsive battery charger of Figure 1 showing various connection interfaces by which the charger circuit can be wholly or partly incorporated into a consumer product or packaged as a separate component;
Figure 2 is a schematic diagram of another proposed battery charger circuit which provides a charging current at a first level and a second charging current at a second, maintenance or 'trickle' charge level;
Figure 3 is a schematic diagram of a variation of the battery charger circuit of Figure 2 for providing first and second levels of charging current;
Figure 3A is a schematic diagram of a variation of the battery charger circuit of Figure 3;
Figure 4 is a schematic diagram of a variation of the battery charger circuits of Figures 2 and 3 illustrating another circuit by which first and second charging current levels can be provided to a battery;
Figure 5 is a schematic diagram of a battery charger circuit in accordance with the present invention in which the charging current is latched off after the battery achieves full charge; and
Figure 6 is a schematic diagram of a variation of the battery charger circuit of Figure 5.

### BEST MODES FOR CARRYING OUT THE INVENTION

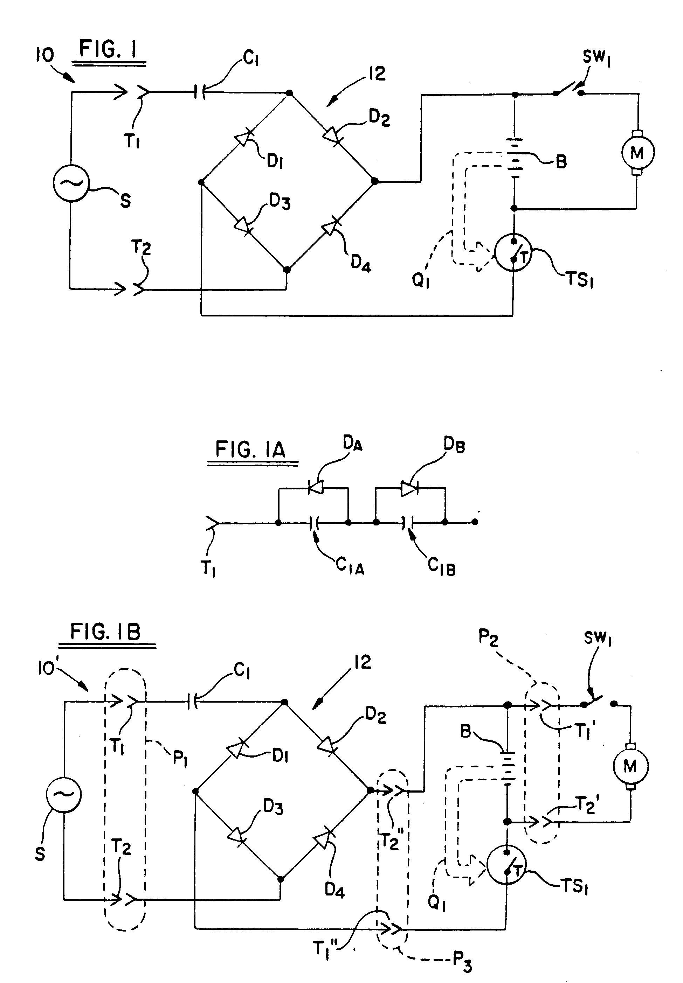

A non-isolated thermally responsive battery charger is shown in general form in Fig. 1 and designated therein by the reference character 10. As shown, the battery charger 10 includes an input capacitive impedance, provided by capacitor C₁, a diode bridge rectifier 12, a battery B to be charged, and a thermostat TS₁. Alternating electric current (AC) is provided directly to the diode bridge 12 from a power source S through input terminals T₁, T₂ with the terminal T₁ connected to the diode bridge 12 through the serially connected capacitor C₁. The diode bridge 12 is of conventional construction and includes diodes D₁, D₂, D₃, and D₄ with the N and P terminals of the diodes D₁, D₂ connected to the capacitor C₁ and the N and P terminals of diodes D₃, D₄ connected to the input terminal T₂. The diode bridge 12 accepts the AC input current and provides a rectified DC current for charging the battery B. The battery B and the thermostat TS₁ are serially connected with the positive terminal of the battery B connected to the N terminals of the diodes D₂, D₄ and the thermostat TS₁ connected to the P terminals of the diodes D₁, D₃. An electrically driven load, as exemplified by the motor M, is serially connected to the battery B through an ON-OFF switch SW₁ of the single-throw, single-pole type. As represented by the heat conduction path Q₁ (dotted line illustration), the thermostat TS₁ is in thermal communication with the battery B and responds to the battery B temperature as described below. Thermal communication may be accomplished, for example, by mounting the thermostat TS₁ adjacent to or in contact with the battery B while the battery B is undergoing charging. The thermostat TS₁ is of the 'latch-open' type, that is, once the thermostat TS₁ is opened, it remains open until it is manually reset by the user, for example, by depressing a reset button.

In order to effect charging of a battery B, the terminals T₁, T₂ are connected to an alternating current power source S, typically 120 VAC. The capacitor C₁ functions as a capacitive impedance (typically 30 microfarads) that limits the AC current flow and the maximum charging current applied to the battery B to a constant predetermined level sufficient to effect a fast charge of the battery B, a 1.2 amp current being representative for 12 volt batteries. The diode bridge 12 operates to provide a succession of positive alternations to the positive side of the battery B which, depending upon its type, converts the electrical energy via a chemical reaction to effect energy storage. The battery B will continue to accept the charge energy until it is fully charged, at which point continued application of the charging energy will cause the battery to heat and its temperature to rise. The heat energy is conveyed to the thermostat TS₁ along thermal path Q₁ with the thermostat TS₁ opening when the temperature of the battery rises above a pre-selected threshold, for example, 45-50°C, to interrupt the charging process. The thermostat TS₁ will latch into its open position and remain open until it is manually reset by the user.

While a single capacitor C₁ of the film type is preferred for providing the capacitive impedance between the power source S and the diode bridge 12, a multi-capacitor arrangement, as illustrated in Fig. 1A, is also suitable. As shown in Fig. 1A, first and second electrolytic capacitors C_{1A}, C_{1B} are serially connected between the terminal T₁ and the diode bridge 12 with the negative sides of the two capacitors C_{1A}, C_{1B} connected together.

Diodes D_{A}, D_{B} are connected across the capacitors C_{1A} and C_{1B}, respectively, with the N side of each diode connected to the P side of its respective capacitor. When the terminal T₁ is positive, the diode D_{B} provides a conduction path around capacitor C_{1B} and, conversely, when the terminal T₁ is negative, the diode D_{A} provides a conduction path around capacitor C_{1A} with each capacitor being charged during the same alternations of successive waveforms. In order to achieve a 30 microfarads equivalent capacitive impedance, the serially connected capacitors C_{1A}, C_{1B} should be 60 microfarads each. The use of electrolytic capacitors results in a physically compact device that has the ability to support full voltage in both current directions.

The above-described circuit 10 provides a constant charging current to the battery B until the current is interrupted by the thermostat TS₁ upon attainment of a sufficiently full charge to cause the battery B to control the thermostat TS₁ to interrupt the charging current, with the thermostat TS₁ remaining in its latched-open state until reset by the user.

The battery charger circuit 10 in Fig. 1, as well as those described below, can be packaged in various congifurations, depending upon the product design. For example and as shown in Fig. 1B, the terminals T₁, T₂ of the circuit 10' can be considered as a connection interface P₁ (symbolically represented in dotted line illustration) with all the components to the right of the connection interface P₁ mounted in the product housing. In the alternative, another connection interface P₂, which includes terminals T₁', T₂' can be provided between the battery B, the switch SW₁ ,and the motor M. In this latter situation, the principal circuit components are contained in a housing (not specifically shown) that is separate from the product and connected to the product via the connection interface P₂. Lastly, a connection interface can be provided in another part of the battery charger circuit. For example, a connection interface P₃ having terminals T₁'', T₂'' can be provided between the diode bridge 12 and the battery charging path, which includes the battery B and the thermostat TS₁. In this last situation, the diode bridge 12 is contained in a separate housing and connected to the product via the connection interface P₃. As can be appreciated, considerable latitude is available to the product designer as to packaging all the circuit components of the charger in the product or a portion of the circuit components in the product and the remainder in a separate housing that can be conveniently attached to the product by the user to effect charging.

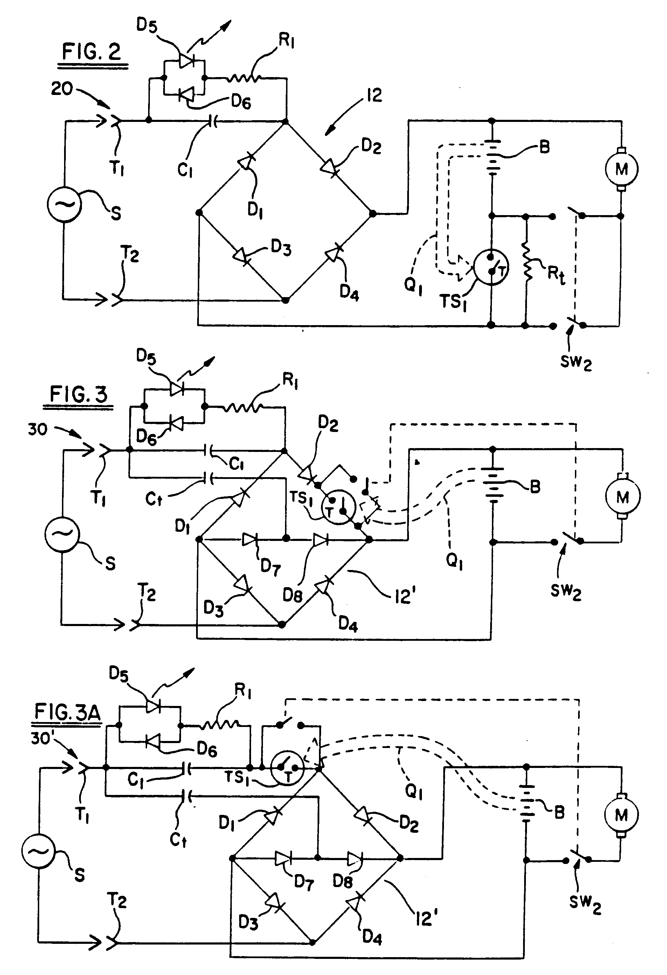

Fig. 2 illustrates a battery charger 20 which provides a first charging current and a second maintenance or 'trickle' charge current, and which uses both the energy stored in the battery and the energy available from the charger circuit to power the load. In Fig. 2, components in common with those described in Fig. 1 are designated by the same reference characters. As shown in Fig. 2, input AC power is provided through terminals T₁, T₂ to the diode bridge 12, with the output of the diode bridge 12 provided to the serially connected battery B and the thermostat TS₁. A resistor Rₜ is connected in shunt circuit across the thermostat TS₁, and an ON-OFF switch SW₂ is connected across the thermostat TS₁ and is in series circuit with the motor M. As shown, the switch SW₂ is of the double-pole, single-throw type with both poles connected to one side of the motor M, one contact connected between the thermostat TS₁ and the battery B, and the other contact connected to the other side of the thermostat TS₁. A circuit for indicating the operating state of the battery charger 20, and for discharging the capacitor C₁, includes back-to-back parallel connected diodes D₅, D₆ in series with a resistor R₁ with the diode-resistor circuit in parallel with the capacitor C₁. As explained below, the diode D₅ is a light-emitting diode (LED) and serves to indicate when the battery charger 20 is supplying the maximum charging current to the battery B, as distinguished from the maintenance or 'trickle' charge current. As in the case of the embodiment of Fig. 1, the thermostat TS₁ is in thermal communication with the battery B along heat conduction path Q₁ and is of the latch-open type.

The battery charger 20 operates in a manner similar to that of Fig. 1 to effect battery charging, that is, positive alternations are provided from the diode bridge 12 to the battery B until a full charge is attained, after which the temperature of the battery B increases to open the thermostat TS₁ and interrupt the charging current. When the thermostat TS₁ is opened, a 'trickle' current is provided through resistor Rₜ to maintain the charge level of the battery B, thus insuring maintenance of the full charge. In general, the 'trickle' current level provided through the resistor Rₜ is sufficient to prevent self-discharge of the battery B, a 22K ohms resistor Rₜ providing a 5 to 10 milliamperes trickle current in the case of the preferred embodiment.

The double-pole, single-throw switch SW₂ allows both the energy stored in the battery B as well as the charging current to power the motor M or other load. When the battery charger 20 is disconnected from the power source S and the switch SW₂ is actuated to its closed position, the circuit from the battery B to the motor M is closed to power the motor M. However, when the battery charger 20 is connected to the power source S and the switch SW₂ is closed, the circuit from the battery B to the motor M is closed, and, additionally, the circuit from the motor M to the current supplying diode bridge 12 is likewise closed, so that electrical energy from the battery B as well as the diode bridge 12 is provided to the motor M. In this latter situation, about 85% of the electrical energy is provided from the battery B and the remaining 15% from the diode bridge 12. As can be appreciated, the battery charger 20 of Fig. 2, when connected to the power source S, functions as both a battery charger for the battery B and a supplemental power supply for the motor M.

The indicator/discharge circuit shunting the capacitor C₁ functions to indicate when the battery charger 20 is in its full charge mode, that is, when the thermostat TS₁ is closed, and to discharge any residual energy stored in the capacitor C₁ when the battery charger 20 is disconnected from the power source S. When the thermostat TS₁ is closed and the full charge current is provided to the battery B, the impedance of the capacitor C₁ is such that the voltage drop across the capacitor C₁ is sufficient to bias the LED diode D₅ into conduction during those periods when the terminal T₁ is positive, to thus indicate to the user that the battery B is being subjected to the full charge current. Conversely, when the battery B is fully charged and the thermostat TS₁ is opened, the current through the battery B is reduced to the trickle current supplied through the resistor Rₜ and, accordingly, the voltage drop across the capacitor C₁ is insufficient to bias the LED diode D₅ into conduction, and thus serves to indicate the conclusion of the full charge period to the user.

When the battery charger 20 is disconnected from the power source S, the capacitor C₁ will retain a residual charge, with the terminal T₁ being either positive or negative, depending upon the moment in the AC waveform that the disconnection was effected. Where the terminal T₁ is positive at the moment of disconnection, the capacitor C₁ will discharge through the diode D₅ and the resistor R₁; conversely, where the terminal T₁ is negative at the moment of disconnection, the capacitor C₁ will discharge through the resistor R₁ and the diode D₆. In general, a resistor R₁ having a value of 22 Kohms is sufficient for the discharge function.

The battery charger 20 of Fig. 2 thus provides for both the full charging and maintenance charging of the battery B, an indication of full charging, a switching arrangement by which both the battery B and the charging current can be used to power the load, and a circuit for discharging the capacitive impedance after the battery charger is disconnected from the power source S.

A variation of the battery charger 20 of Fig. 2 is shown in Fig. 3 and designated therein generally by the reference character 30. As shown in Fig. 3, the resistor Rₜ has been omitted, while a capacitor Cₜ is connected to terminal T₁ and two additional bridge diodes D₇, D₈ to provide a modified diode bridge 12'. The diodes D₇, D₈ are supplied through the capacitor Cₜ and function in a manner analogous to the diodes D₁, D₂ connected to the capacitor C₁. The capacitor Cₜ has a capacitance of about 10% of that of the capacitor C₁, that is, about 3 microfarads in the case of the preferred embodiment. Additionally, the battery B is connected directly across the output of the diode bridge 12', and the thermostat TS₁ is connected in series with the diode D₂ with one pole of the switch SW₂ connected across the thermostat TS₁. When the battery B is undergoing charging, both the capacitor C₁ and the capacitor Cₜ function as capacitive impedances to pass a full charge current from the diode bridge 12' to the battery B. As the battery B attains full charge, the thermostat TS₁ opens to interrupt the charging current provided by capacitor C₁ through diode D₂. When the thermostat TS₁ is in its latched-open state, a much lower trickle charge current is provided through capacitor Cₜ and the diode D to the battery B to maintain the full charge condition of the battery B. When the switch SW₂ is closed by the operator, the thermostat TS₁ is shunted to again allow current to pass via capacitor C₁ and the diode D₂ to the battery B to supplement the power provided from the battery B as described above. The battery charger 30 of Fig. 3 thus achieves the same function as that of Fig. 2 without the need for the resistor Rₜ shunting the thermostat TS₁.

A variation of the battery charger 30 of Fig. 3 is shown in Fig. 3A and designated therein by the reference character 30'. As shown, the thermostat TS₁ is placed in series circuit between the capacitor C₁ and the connection between the diodes D₁, D₂ of the diode bridge 12'. The circuit variation 30' operates in a manner analogous to the circuit 30 of Fig. 3. That is, the full or fast charge current is provided through the capacitor C₁ and the thermostat TS₁ to the diode bridge 12', until the battery B attains full charge and the thermostat TS₁ is opened with a trickle or maintenance current provided through the capacitor Cₜ.

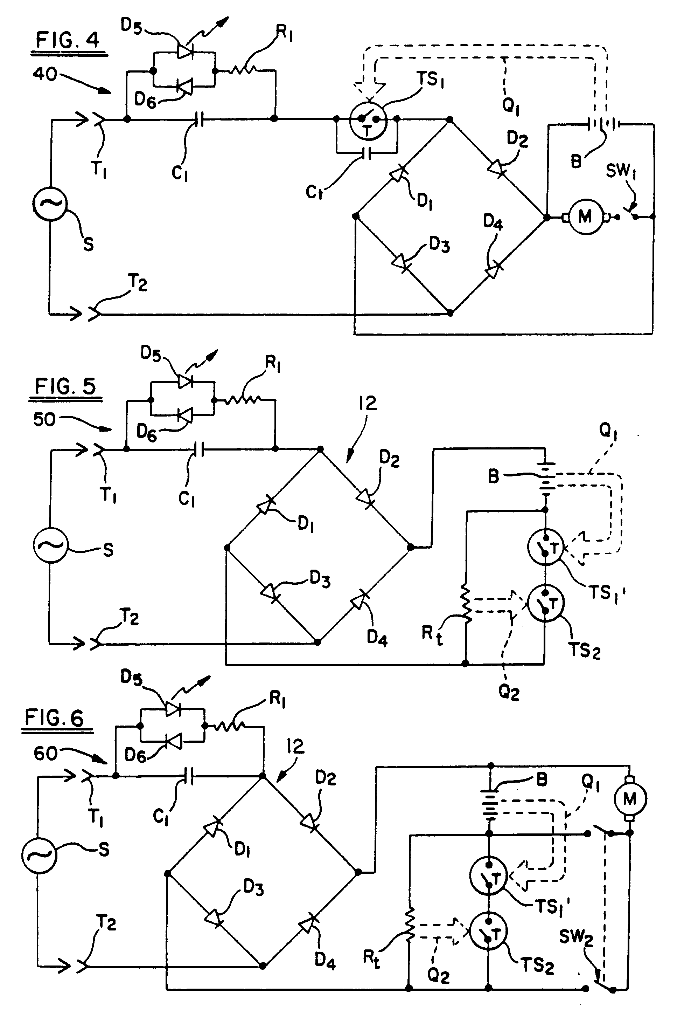

A variation of the battery charger circuits 30 and 30' of Figs. 3 and 3A is shown in Fig. 4 and designated generally by the reference character 40. As shown, the thermostat TS₁ is placed in series in the AC portion of the circuit between the terminal T₁ and the diode bridge 12. When the temperature of the battery B exceeds the threshold of the thermostat TS₁ ,the thermostat is opened to thus interrupt the charging current applied to the battery B. A capacitor Cₜ is provided in parallel circuit with the thermostat TS₁ and functions in a manner analogous to the resistor Rₜ of the embodiment of Fig. 2 to provide an AC current path around the opened thermostat TS₁ ,and thus provide a constant trickle current flow to the battery B when the thermostat TS₁ is open.

In the above-described circuit embodiments, the thermostat TS₁ operates in response to battery B temperature; that is, as the battery B attains full charge and its temperature rises, the thermostat TS₁ opens and remains in a latched-open state until it is reset by the user. A battery charger having a latched-open thermostat arrangement, that automatically resets after the charger is disconnected from the power source S, is shown in Fig. 5 and designated therein generally by the reference character 50. As shown, the power source S provides electrical energy via terminals T₁, T₂ and the capacitor C₁ to the diode bridge 12. The battery B is in series circuit with a thermostat TS₁' and another serially connected thermostat TS₂ across the output of the diode bridge 12. In contrast to the thermostat TS₁ ,the thermostats TS₁', TS₂ are of the non-latching type, that is, they open and close in response to changing temperature. A trickle resistor Rₜ is connected in parallel across the series-connected thermostats TS₁', TS₂. As indicated in dotted line illustration, the thermostat TS₁' is in thermal communication with the battery B via heat conduction path Q₁ while the resistor Rₜ is in thermal communication with the thermostat TS₂ along heat conduction path Q₂. In operation, the thermostat TS₁' functions in the manner described above to interrupt the flow of charging current to the battery B when the temperature of the fully charged battery B rises above the preselected threshold of the thermostat TS₁', e.g., 45 to 50°C. When the thermostat TS₁' opens, a trickle current flow is established through the resistor Rₜ which then undergoes Joule heating and, when its temperature rises to a pre-selected threshold value, typically 45 to 50°C, the thermostat TS₂ opens. In this circuit configuration, the thermostat TS₁' can then re-close once the temperature of the now fully charged battery B falls below the pre-selected threshold temperature, e.g., 40 to 44°C. However, the current flow through the resistor Rₜ and the associated Joule heating will keep the thermostat TS₂ open to effectively prevent resumption of the charging current flow through the battery B. The circuit will remain in this "latched" state indefinitely, and can be only re-initialized by removing the battery B from the battery charger 50, or disconnecting the power source S and allowing the resistor Rₜ to cool and the thermostat TS₂ to reset. As can be appreciated, the battery charger 50 eliminates unnecessary cycling of the charging current applied to the battery B, and can be left in its trickle charge mode indefinitely.

A variation of the latching thermostat configuration of Fig. 5 is shown in Fig. 6 and designated therein by the reference character 60, components in common with those of Fig. 2 being designated by the same reference characters. As shown, thermostats TS₁', TS₂ are serially connected with the battery B across the diode bridge 12.

One pole of the double-pole single-throw ON-OFF switch SW₂ is connected between the battery B and the motor M, and the other pole connected to the common current path with the diode bridge 12. The thermostats TS₁', TS₂ operate in the manner described above to provide a full charge current to the battery B and to latch open when the temperature of the fully charged battery B rises above the threshold of thermostat TS₁'. When the ON-OFF switch SW₂ is closed, electrical energy from the battery B and supplemental electrical energy from the power source S can be used to power the motor M, with the proportionate energy contributions from the battery B and the charger circuit being as described above, to allow a longer operating period before the battery B discharges.

As will be realized, some of the above embodiments of the present invention advantageously provide a compact battery charger, that is inexpensive to fabricate because of its non-isolated configuration, and yet provides for the efficient charging of batteries, including both full charge and trickle charge operating states, and which also has a latching feature by which the charging circuit is latched into the trickle charge operating state after the attainment of a full charge.

It will be appreciated from the above, that the present invention provides a highly effective, non-isolated, thermally responsive battery charger.

Also, as will be appreciated, when the battery undergoing charging has attained a full charge in some of the battery charger circuits described, charging is discontinued, while in other circuits charging then continues in a non-full charge mode, i.e. trickle or maintenance charging continues. However, in either case the battery can be charged in a fast and efficient manner without overcharging.

As will further be appreciated, some of the embodiments of the battery charger of the invention not only provide for charging the battery in a fast and efficient manner without overcharging, but additionally can be utilized to supplement the power provided by the battery when a battery-powered consumer product is operated.

It will be apparent, and is contemplated, that modifications and/or changes may be made in the illustrated preferred embodiments without departure from the invention as defined by the claims.

## Claims

1. A non-isolated temperature-responsive battery charger circuit which comprises:
a diode bridge circuit (12) for accepting an AC input current and for providing a rectified charging current;
capacitive impedance means (C1) in circuit with said diode bridge circuit (12) for direct connection to a source of AC input current (S) for coupling the AC input current to said diode bridge circuit (12); and
a battery charging circuit path connected to said diode bridge circuit (12) for providing the charging current to a battery (B) connected to said charging circuit path; characterised by
first and second serially connected temperature responsive thermostats (TS1'; TS2) electrically connected in said charging circuit path to pass charging current as determined by said capacitive impedance means (C1) to the battery (B) being charged when said first and second thermostats (TS1'; TS2) are in a closed state;
resistive impedance means (Rt) in parallel circuit with said first and second serially connected thermostats (TS1'; TS2), for conducting current when at least one of said first or second thermostats is open to effect trickle charging of the battery (B);
said first thermostat (TS1') being in thermal communication with the battery (B) being charged to sense the temperature of the battery, and said second thermostat (TS2) being in thermal communication with said resistive impedance means (Rt) to sense the temperature of said resistive impedance means (Rt);
said first thermostat (TS1') responding to the temperature of the battery (B) to interrupt the flow of full charging current to the battery through said first thermostat (TS1') when the temperature of the battery (B) exceeds a predetermined threshold representative of a substantial full charge and to cause trickle charging current flow through said resistive means (Rt); and
said second thermostat (TS2) responding to the temperature of said resistive impedance means (Rt) to interrupt the circuit to said first thermostat (TS1') when the temperature of said resistive means (Rt) exceeds a predetermined threshold.

2. A non-isolated temperature-responsive battery charger circuit, according to Claim 1, further characterised by:
switch means (SW1; SW2), in circuit with the battery (B) and said first and second thermostats (TS1;TS1'), arranged for providing electrical power to a connected load (M) from the battery (B) supplemented by a smaller contribution of electrical power provided by the rectified current at the established level for charging the battery as supplied from said diode bridge circuit (12).

3. A battery charger circuit according to Claim 1 or 2, wherein said capacitive impedance means (C1) comprises at least first and second serially connected capacitors (C1A, C1B) connected to said diode bridge circuit (12) for direct connection therewith to the source of AC input current (S).

4. A battery charger circuit according to Claim 3, wherein said first and second capacitors (C1A, C1B) are electrolytic capacitors serially connected with one polarity terminal of one capacitor connected to the same polarity terminal of the other and with a diode connected across each capacitor.

5. A battery charger circuit according to any one of the preceding claims, wherein circuit means (R1,D5,D6) are connected in parallel circuit with said capacitive impedance means (C1) for discharging said capacitive impedance means (C1).

6. A battery charger circuit according to Claim 5, wherein said circuit means (R1,D5,D6) comprises parallel connected back-to-back diodes (D5,D6) in series circuit with a resistor (R1).

7. A battery charger circuit according to Claim 6, wherein at least one (D5) of said parallel connected diodes (D5,D6) is a light emitting diode.

8. A battery charger according to any one of the preceding claims, wherein switch means (SW1;SW2) are arranged for the battery (B) to provide about 85% of the electrical power to the connected load (M) which is supplemented by said diode bridge circuit (12) providing about 15% of the electrical power to the connected load (M).

9. A battery charger according to any one of Claims 1 to 8, wherein double pole switch means (SW2) are provided for disconnecting the battery (B) from a load (M) when said switch means (SW2) is open, and for shunting said first and second thermostats (TS1;TS2) and connecting both the battery (B) and said capacitive impedance means (C1) to said load (M) when said switch means (SW2) is closed.

## Patentansprüche

1. Nicht-isolierte, temperaturansprechende Batterieladeschaltung, mit:
einer Diodenbrückenschaltung (12) zur Aufnahme eines Eingangswechselstroms und zur Lieferung eines gleichgerichteten Ladestroms;
kapazitiven Impedanzmitteln (C1) im Stromkreis mit der Diodenbrückenschaltung (12) zur direkten Verbindung mit einer Quelle (S) für Eingangswechselstrom, um den Eingangswechselstrom an die Diodenbrückenschaltung (12) anzuschließen; und
einem Batterielade-Stromkreisweg, der mit der Diodenbrückenschaltung (12) verbunden ist, um den Ladestrom zu einer Batterie (B) zu liefern, die an den Ladestromkreisweg angeschlossen ist;
gekennzeichnet durch
einen ersten und einen zweiten, in Reihe geschalteten, temperaturansprechenden Thermostat (TS1'; TS2), die elektrisch in dem Ladestromkreisweg angeschlossen sind, um der aufzuladenden Batterie (B) den durch die kapazitiven Impedanzmittel (C1) bestimmten Ladestrom zuzuführen, wenn der erste und der zweite Thermostat (TS1'; TS2) in geschlossenem Zustand sind;
Widerstands-Impedanzmittel (Rt) in paralleler Schaltung mit den ersten und zweiten, in Reihe geschalteten Thermostaten (TS1'; TS2), um Strom zu leiten, wenn wenigstens einer von dem ersten und dem zweiten Thermostat geöffnet ist, um ein Erhaltungsladen der Batterie (B) zu bewirken;
wobei der erste Thermostat (TS1') in thermischem Austausch mit der aufzuladenden Batterie (B) steht, um die Temperatur der Batterie abzufühlen, und der zweite Thermostat (TS2) in thermischem Austausch mit den Widerstands-Impedanzmitteln (Rt) steht, um die Temperatur der Widerstands-Impedanzmittel (Rt) abzufühlen;
wobei der erste Thermostat (TS1') auf die Temperatur der Batterie (B) anspricht, um den Fluß des vollen Ladestroms zu der Batterie durch den ersten Thermostat (TS1') zu unterbrechen, wenn die Temperatur der Batterie (B) eine vorgegebene Schwelle überschreitet, welche einer im wesentlichen vollständigen Aufladung entspricht, und einen Erhaltungsladestrom durch die Widerstandsmittel (Rt) zu bewirken; und
wobei der zweite Thermostat (TS2) auf die Temperatur der Widerstands-Impedanzmittel (Rt) anspricht, um den Stromkreis zu dem ersten Thermostat (TS1') zu unterbrechen, wenn die Temperatur der Widerstandsmittel (Rt) eine vorgegebene Schwelle überschreitet.

2. Nicht-isolierte, temperaturansprechende Batterieladeschaltung nach Anspruch 1, weiter gekennzeichnet durch:
Schaltmittel (SW1; SW2) im Stromkreis mit der Batterie (B) und den ersten und zweiten Thermostaten (TS1; TS1'), die dazu ausgelegt sind, einer angeschlossenen Last (M) elektrische Leistung aus der Batterie (B) ergänzt durch einen kleineren Beitrag von elektrischer Leistung, die ab einem vorgegebenen Niveau der Aufladung der Batterie durch von der Diodenbrückenschaltung (12) gleichgerichteten Strom ergänzt wird.

3. Batterieladeschaltung nach Anspruch 1 oder 2, wobei die kapazitiven Impedanzmittel (C1) wenigstens einen ersten und einen zweiten, in Reihe geschalteten Kondensator (C1A, C1B) aufweisen, die mit der Diodenbrückenschaltung (12) zum direkten Anschluß an die Quelle für Eingangswechselstrom (S) verbunden sind.

4. Batterieladeschaltung nach Anspruch 3, wobei die ersten und zweiten Kondensatoren (C1A, C1B) elektrolytische Kondensatoren sind, die in Reihe geschaltet mit einem Polaritätsanschluß des einen Kondensators mit dem Anschluß gleicher Polarität des anderen verbunden sind und mit einer Diode über jeden Kondensator verbunden sind.

5. Batterieladeschaltung nach einem der vorhergehenden Ansprüche, wobei Schaltkreismittel (R1, D5, D6) in Parallelschaltung mit den kapazitiven Impedanzmitteln (C1) zum Entladen der kapazitiven Impedanzmittel (C1) verbunden sind.

6. Batterieladeschaltung nach Anspruch 5, wobei die Schaltkreismittel (R1, D5, D6) parallel, in entgegengesetzte Richtungen geschaltete Dioden (D5, D6) in Reihenschaltung mit einem Widerstand (R1) aufweisen.

7. Batterieladeschaltung nach Anspruch 6, wobei wenigstens eine (D5) der parallel geschalteten Dioden (D5, D6) eine Leuchtdiode ist.

8. Batterieladeschaltung nach einem der vorhergehenden Ansprüche, wobei die Schaltmittel (SW1; SW2) so ausgelegt sind, daß die Batterie (B) etwa 85 % der elektrischen Leistung an die angeschlossene Last (M) liefert, welche Leistung durch die Diodenbrückenschaltung (12) mit einer Lieferung von etwa 15 % der elektrischen Leistung an die angeschlossene Last (M) ergänzt wird.

9. Batterieladeschaltung nach einem der Ansprüche 1 bis 8, wobei ein zweipoliges Schaltmittel (SW2) vorgesehen ist, um die Batterie (B) von der Last (M) zu trennen, wenn das Schaltmittel (SW2) offen ist, und um die ersten und zweiten Thermostate (TS1; TS2) im Nebenschluß zu umgehen und sowohl die Batterie (B) als auch die kapazitiven Impedanzmittel (C1) mit der Last (M) zu verbinden, wenn das Schaltmittel (SW2) geschlossen ist.

## Revendications

1. Circuit de chargeur de batterie non isolé thermosensible, qui comporte :
un circuit en pont de diodes (12) servant à recevoir un courant alternatif d'entrée et délivrer un courant de charge redressé;
des moyens formant impédance capacitive (C1) raccordés audit circuit en pont de diodes (12) pour le raccordement direct à une source de courant alternatif d'entrée (S) pour l'application du courant alternatif d'entrée audit circuit en pont de diodes (12); et
un trajet du circuit de charge de la batterie, qui est raccordé audit circuit en pont de diodes (12) pour envoyer le courant de charge à une batterie (B) raccordé audit trajet du circuit de charge;
caractérisé par
des premier et second thermostats thermosensibles (TS1'; TS2) branchés en série et raccordés électriquement dans ledit trajet du circuit de charge pour transmettre le courant de charge tel qu'il est déterminé par lesdits moyens formant impédance capacitive (C1) à la batterie (B) étant chargés lorsque lesdits premier et second thermostats (TS1'; TS2) sont à l'état fermé;
des moyens formant impédance résistive (Rt) branchés en parallèle avec lesdits premier et second thermostats (TS1'; TS2) branchés en série, pour transmettre le courant lorsqu'au moins l'un desdits premier et second thermostats est ouvert de manière à réaliser une charge de maintien de la batterie (B);
ledit premier thermostat (TS1') étant en communication thermique avec la batterie (B) au cours du chargement pour détecter la température de la batterie, ledit second thermostat (TS2) étant en communication thermique avec lesdits moyens formant impédance résistive (Rt) pour détecter la température desdits moyens formant impédance résistive (Rt);
ledit premier thermostat (TS1') répondant à la température de la batterie (B) pour interrompre le flux du courant de charge total envoyé à la batterie par l'intermédiaire dudit premier thermostat (TS1'), lorsque la température de la batterie (A) dépasse un seuil prédéterminé représentatif d'une charge sensiblement complète et pour amener le courant de charge de maintien à circuler dans lesdits moyens résistifs (Rt); et
ledit second thermostat (TS2) répondant à la température desdits moyens formant impédance résistive (Rt) pour interrompre le circuit raccordé audit premier thermostat (TS1') lorsque la température desdits moyens résistifs (Rt) dépasse un seuil prédéterminé.

2. Circuit de chargeur de batterie non isolé thermosensible selon la revendication 1, caractérisé en outre par :
des moyens de commutation (SW1; SW2) raccordés à la batterie (B) et auxdits premier et second thermostats (TS1; TS1') et agencés de manière à envoyer une énergie électrique et une charge raccordée (M) à partir de la batterie (B), cette énergie étant complété par une contribution, plus faible, de l'énergie électrique délivrée par le courant redressé au niveau établi pour la charge de la batterie, tel qu'il est délivré par ledit circuit en pont de diodes (12).

3. Circuit de chargeur de batterie non isolé thermosensible selon la revendication 1 ou 2, dans lequel les moyens formant impédance capacitive (C1) comprennent au moins des premier et second condensateurs (C1A, C1B) branchés en série et raccordés audit circuit formant pont de diodes (12) pour le raccordement direct de ce dernier à la source de courant alternatif d'entrée (S).

4. Circuit de chargeur de batterie selon la revendication 3, dans lequel lesdits premier et second condensateurs (C1A, C1B) sont des condensateurs électrolytiques raccordés en série, une borne possédant une polarité d'un condensateur étant raccordée à la borne possédant la même polarité de l'autre condensateur, tandis qu'une diode est branchée aux bornes de chaque condensateur.

5. Circuit de chargeur de batterie selon l'une quelconque des revendications précédentes, dans lequel les moyens formant circuit (R1,D5,D6) sont branchés en parallèle avec lesdits moyens formant impédance capacitive (C1) pour la décharge desdits moyens formant impédance capacitive (C1).

6. Circuit de chargeur de batterie selon la revendication 5, dans lequel lesdits moyens formant circuit (R1,D5,D6) comprennent des diodes en opposition (D5,D6) branchées selon un montage en parallèle raccordées en série à une résistance (R1).

7. Circuit de chargeur de batterie selon la revendication 6, dans lequel au moins l'une (D5) desdites diodes (D5,D6) branchées en parallèle est une diode photoémissive.

8. Chargeur de batterie selon l'une quelconque des revendications précédentes, dans lequel des moyens de commutation (SW1;SW2) sont prévus pour la batterie (B) de manière à fournir environ 85 % de l'énergie électrique à la charge raccordée (M), énergie qui est complétée par ledit circuit en pont de diodes (12) délivrant environ 15 % de l'énergie électrique envoyée à la charge raccordée (M).

9. Chargeur de batterie selon l'une quelconque des revendications 1 à 8, dans lequel des moyens de commutation bipolaires (SW2) sont prévus pour le débranchement de la batterie (B) d'une charge (M) lorsque lesdits moyens de commutation (SW2) sont ouverts, et pour shunter lesdits premier et second thermostats (TS1;TS2) et les raccorder tous deux à la batterie (B) et raccorder lesdits moyens formant impédance capacitive (C1) à ladite charge (M), lorsque lesdits moyens de commutation (SW2) sont fermés.
